# FASCICULE DE BREVET EUROPEEN

(11) **EP 0 791 741 B1**
(45) Date de publication et mention de la délivrance du brevet: **04.12.2002**
(21) Numéro de dépôt: 97400337.8
(22) Date de dépôt: 14.02.1997
(51) Int. Cl.: F02K 9/34

(54) **Procédé de réalisation d'une protection thermique interne pour propulseur**
Wärmeisolatorschicht für Feststoffraketenmotor
Thermal insulation for solid rocket motor

(30) Priorité: 20.02.1996 FR 9602051
(43) Date de publication de la demande: 27.08.1997
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Bourdoncle, Jacques, 33160 ST Aubin De Medoc (FR); Le Magourou, Loic, 33160 ST Medard en Jalles (FR)
(74) Mandataire: Joly, Jean-Jacques

(56) Documents cités:
- EP-A- 0 659 860
- FR-A- 2 144 071
- GB-A- 2 178 745
- US-A- 4 108 940
- US-A- 4 501 771
- US-A- 4 942 214
- PATENT ABSTRACTS OF JAPAN vol. 011, no. 250 (M-616), 14 Août 1987 & JP 62 060617 A (SHIN ETSU POLYMER CO LTD), 17 Mars 1987,
- PATENT ABSTRACTS OF JAPAN vol. 004, no. 030 (C-002), 15 Mars 1980 & JP 55 005944 A (DENKI KAGAKU KOGYO KK), 17 Janvier 1980,

## Description

L'invention concerne la réalisation de protections thermiques internes à haute résistance à l'ablation pour propulseurs. Un domaine particulier d'application de l'invention est celui des protections thermiques internes pour des structures "fond-rallonge" de propulseurs d'engins tactiques. L'invention est toutefois utilisable pour d'autres structures de propulseurs, par exemple pour des protections thermiques internes de fonds de gros propulseurs.

Les propulseurs à poudre pour des engins tactiques sont généralement constitués :
- d'un corps de propulseur renfermant le propergol,
- d'une structure fond-rallonge comprenant une partie fond fermant le corps de propulseur à son extrémité arrière et une partie rallonge prolongeant le fond, et
- d'une tuyère fixée à l'extrémité de la rallonge.

La rallonge est généralement cylindrique avec un diamètre sensiblement réduit par rapport au corps de propulseur, ceci afin de pouvoir ménager autour de la rallonge un espace permettant de loger des équipements sans accroître l'encombrement au-delà du diamètre du corps de propulseur.

La structure fond-rallonge est habituellement une structure métallique munie d'une protection thermique interne.

Il est nécessaire que la protection thermique interne présente une résistance élevée à l'ablation causée par les gaz de combustion du propergol circulant à très grande vitesse en direction de la tuyère pendant la phase opérationnelle.

Il est nécessaire également que la protection thermique présente une bonne capacité d'isolation au regard de la température des gaz de combustion afin de permettre, pendant toute la phase opérationnelle, une limitation de la température de la structure métallique à un niveau compatible avec sa fonction structurale, et une limitation de la température à l'extérieur de la structure métallique à un niveau compatible avec le bon fonctionnement des équipements qui s'y trouvent.

Il est encore hautement souhaitable que le matériau de la protection thermique présente une capacité de déformation élevée lui permettant de suivre les déformations de la structure métallique, sans rupture mécanique et sans décollement par rapport à la structure métallique. En effet, la structure métallique est susceptible de se déformer de façon sensible sous l'effet, notamment, de la pression des gaz de combustion. Une capacité insuffisante de déformation du matériau de la protection thermique nécessiterait un épaississement de la structure ou une complication de l'architecture avec incidences pénalisantes sur le poids et le coût de l'ensemble.

Afin de satisfaire ces conditions, il est connu de réaliser des protections thermiques en matériau composite, notamment de type tissu-résine phénolique. Le tissu, qui constitue le renfort du matériau composite, est par exemple en fibres de carbone ou, lorsque les gaz de combustion du propergol ont un fort pouvoir oxydant, en fibres résistant à l'oxydation, par exemple en fibres de silice. L'élaboration de la protection thermique comprend les phases d'imprégnation du tissu par la résine phénolique, la découpe du tissu imprégné en bandes, le bobinage des bandes en biais sur une forme, la cuisson, l'usinage de la protection thermique aux dimensions voulues et le collage sur la paroi interne de la structure à protéger.

Les coûts des matériaux de base et des différentes opérations, qui peuvent difficilement être toutes automatisées, rendent cette solution très onéreuse.

Une autre solution connue, moins onéreuse, consiste à utiliser, pour la protection thermique, des matériaux à base élastomérique renforcée par des fibres, par exemple, selon la nature du propergol, des fibres de carbone ou des fibres résistant à l'oxydation telles que des fibres de silice. L'élaboration de la protection thermique comprend la réalisation d'une base élastomérique, à partir d'un élastomère gomme à viscosité relativement élevée, au moyen de mélangeurs classiques tels qu'utilisés dans l'industrie du caoutchouc, le mélange de la base élastomérique avec les fibres, le tirage en feuille par passage par exemple entre des rouleaux, la découpe de la feuille, la mise en place des couches découpées dans un moule, le moulage de la protection thermique interne sous forte pression, compte tenu de la forte viscosité du mélange, et le collage de la protection thermique sur la structure à protéger. Un tel procédé est décrit dans le document FR-A-2 144 071 de la demanderesse. La forte viscosité de la base élastomérique permet le tirage en feuille, mais rend le mélange avec les fibres délicat pour ne pas briser les fibres. Il peut même être préférable, pour ce mélange, de mettre la base élastomérique en solution, ce qui nécessite des étapes supplémentaires ultérieures d'élimination du solvant et séchage.

En dépit du nombre relativement important d'opérations, cette solution est moins onéreuse que la première. Elle offre en outre, en raison de l'utilisation d'une base élastomérique, une plus grande capacité de déformation. Toutefois, ces deux solutions connues présentent l'inconvénient de ne pas garantir une fiabilité absolue du collage sur la paroi interne de la structure à protéger. Il en est ainsi en particulier pour la partie rallonge, dans le cas d'une structure fond-rallonge, le collage cylindre sur cylindre étant très délicat. Or, un collage sûr, même après une période de stockage prolongée, est nécessaire au bon fonctionnement du propulseur.

Aussi, la présente invention a pour but d'offrir un procédé de réalisation d'une protection thermique interne qui offre une meilleure garantie de la fiabilité du collage sur la paroi de la structure à protéger.

L'invention a aussi pour but de diminuer le coût de fabrication et mise en oeuvre d'une telle protection thermique interne en comparaison avec l'état de la technique.

Ces buts sont atteints grâce à un procédé de réalisation d'une protection thermique interne pour une structure d'un propulseur, procédé du type comprenant la réalisation d'une base élastomérique et son mélange avec des fibres afin d'obtenir une protection thermique sous forme d'une couche d'élastomère renforcé par des fibres,
procédé comportant les étapes qui consistent à :
- préparer une base élastomérique de viscosité inférieure à 1500 Pa.s à 50°C composée essentiellement d'un produit choisi parmi les polychloroprènes et les silicones gommes qui vulcanisent à une température supérieure à 120 °C,
- mélanger la base élastomérique et les fibres au moyen d'un mélangeur mécanique, sans passage par une phase en solution, de manière à obtenir une composition solide sous forme divisée susceptible d'être stockée, et
- mouler la composition in situ afin d'obtenir directement la protection thermique sur la structure à protéger.

L'utilisation d'une base élastomérique à basse viscosité apporte plusieurs avantages significatifs.

En premier, il est alors possible de réaliser le mélange avec les fibres au moyen d'un mélangeur mécanique, par exemple un mélangeur interne classique de l'industrie du caoutchouc, sans endommager les fibres, de sorte que le passage de la base élastomérique à l'état de solution n'est pas nécessaire.

En second, la faible viscosité de la base élastomérique, si elle ne permet pas la réalisation de feuilles susceptibles ensuite d'être drapées sur une forme, comme dans l'art antérieur, elle permet par contre de réaliser aisément le moulage in situ de la protection thermique, notamment par mise en place de la composition à l'état divisé entre la structure à protéger et au moins un élément de moule complémentaire, mise en compression de la composition à faible pression compatible avec la limite élastique du métal de la structure, et vulcanisation in situ. Durant cette dernière opération, la vulcanisation de la protection thermique et son adhésion sur la structure sont réalisées de'façon concomitante.

Un autre avantage du procédé réside dans le fait qu'en utilisant une base élastomérique qui vulcanise à haute température, c'est-à-dire à température supérieure à 120°C, il est possible de stocker la composition formée par le mélange base élastomérique - fibres pendant des périodes relativement longues, avant mise en oeuvre. A cet égard, cette composition se distingue de celles décrites dans les documents US 4 076 684 et US 4 108 940 qui ont une très courte durée d'utilisation, puisqu'elles vulcanisent à température ambiante, et qui sont destinées à des applications tout autres que des protections thermiques de propulseurs.

Un avantage supplémentaire du procédé consiste dans le nombre réduit d'opérations en comparaison avec les procédés de l'art antérieur.

En outre, le moulage de la protection thermique in situ permet d'assurer une meilleure adhésion avec la structure à protéger. On peut à cet effet traiter la surface de la structure à protéger au moyen d'un agent d'adhésion, avant le moulage de la protection thermique. Il est possible aussi d'intégrer l'agent d'adhésion dans la composition de la base élastomérique, comme cela est connu en soi du document EP-0 659 860 pour des matrices élastomères devant adhérer sur des substrats.

Un mode particulier de réalisation d'un procédé conforme à l'invention sera décrit ci-après, à titre indicatif mais non limitatif, en référence aux dessins annexés, sur lesquels :
- la figure 1 est une vue schématique en demi-coupe axiale d'un ensemble arrière de propulseur tactique, avec une structure fond-rallonge munie d'une protection thermique interne, et
- les figures 2A à 2H illustrent de façon extrêmement schématique différentes étapes successives de réalisation d'une protection thermique du type de celle de la figure 1 selon un procédé conforme à la présente invention.

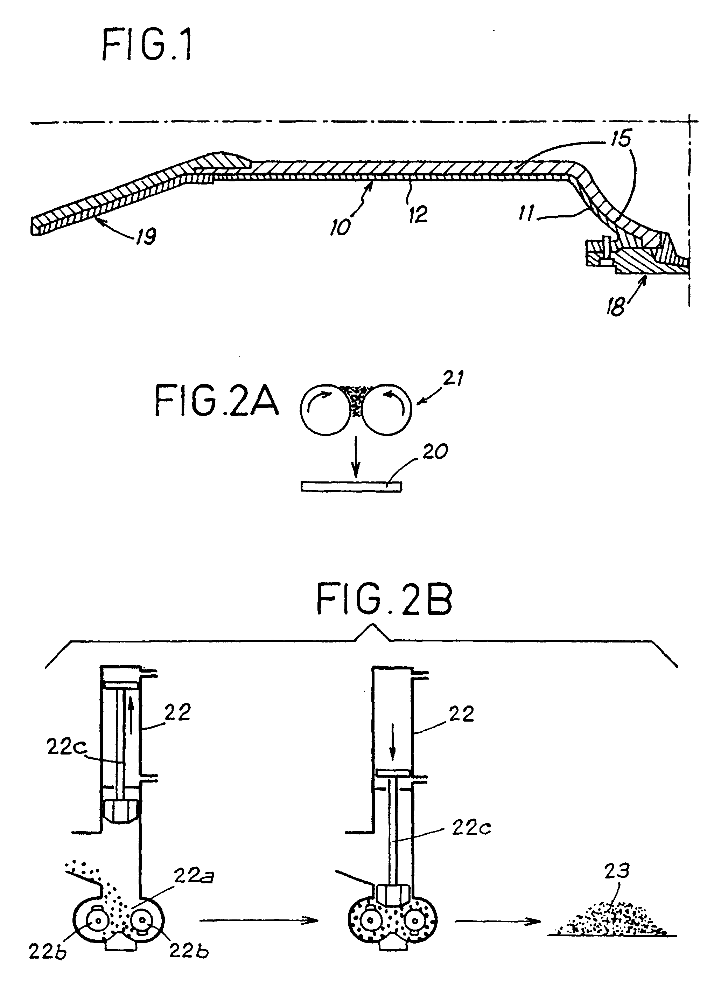

Sur la figure 1, les références 11 et 12 désignent respectivement la partie fond et la partie rallonge d'une structure métallique fond-rallonge 10 disposée entre un corps de propulseur 18 renfermant un propergol solide et une tuyère 19 d'éjection des gaz de combustion du propergol.

Le propulseur est par exemple un propulseur tactique à propergol solide. Comme le montre la figure 1, le fond 11 ferme le corps de propulseur 18 à sa partie arrière, tandis que la rallonge 12 prolonge le fond et raccorde celui-ci à la tuyère 19.

La rallonge 12 a un diamètre externe sensiblement inférieur à celui du corps de propulseur, permettant de loger divers équipements (non représentés) dans l'espace entourant la rallonge 12, sans excéder le diamètre externe du corps de propulseur.

Une protection thermique 15 est collée sur la paroi interne de la structure métallique fond-rallonge 11-12. La protection thermique a pour fonction d'isoler thermiquement la structure métallique et l'espace entourant celle-ci des gaz de combustion produits par le propergol pendant la phase opérationnelle du propulseur, de sorte que la fonction structurale de la structure fond-rallonge et le fonctionnement des équipements situés autour de la rallonge ne soient pas affectés.

La protection thermique 15 doit présenter une grande résistance à l'ablation par les gaz de combustion qui sont éjectés à grande vitesse pendant la phase opérationnelle. La protection thermique 15 doit également présenter une bonne capacité de déformation afin de suivre des variations dimensionnelles notamment d'origine thermique de la structure métallique, sans rupture et sans décollement.

Pour ces raisons, la protection thermique 15 est ici réalisée en un élastomère renforcé par des fibres.

Un mode de réalisation d'une protection thermique telle que celle de la figure 1 sera maintenant décrit en référence aux figures 2A à 2H.

Une première étape consiste à élaborer une base élastomérique. Selon une caractéristique de la présente invention, la base élastomérique est choisie de manière à présenter une basse, voire très basse, viscosité de manière, comme décrit plus loin, à permettre le mélange ultérieur avec des fibres par des moyens mécaniques, sans recourir à la dissolution de la base élastomérique et sans endommager les fibres. La viscosité est choisie inférieure à 1 500 Pa.s à 50 °C. En outre, on choisit une base élastomérique qui vulcanise à haute température, c'est-à-dire à plus de 120 °C.

Lorsque le propergol comporte une charge à base de poudre d'aluminium, la base élastomérique comprend de préférence essentiellement une gomme polychloroprène à basse viscosité, par exemple celle commercialisée sous la dénomination "Neoprène FB" par la société des Etats-Unis d'Amérique DuPont de Nemours. A cette gomme peuvent être ajoutés différents composants, notamment :
- une résine telle qu'une résine phénolique ayant pour but de favoriser la formation d'un résidu carboné au cours de la pyrolyse de la protection thermique, sous l'action des gaz de combustion ;
- un agent plastifiant, ayant pour but de diminuer la viscosité du mélange au cours de son élaboration et d'améliorer le comportement mécanique de la protection thermique aux basses températures de stockage du propulseur ; ce plastifiant sera choisi préférentiellement parmi les plastifiants esters ;
- du noir de carbone, ou autre charge renforçante équivalente, ayant pour but d'améliorer les caractéristiques mécaniques de la protection thermique ;
- un système vulcanisant classique constitué par exemple par une association d'oxyde de magnésium, d'oxyde de zinc, et d'acide stéarique ; et
- des fibres par exemple de carbone (à précurseur rayonne, ou précurseur polyacrylonitrile, ou précurseur brai isotrope) ayant pour but de renforcer mécaniquement le résidu carboné se formant au cours de la pyrolyse de la protection thermique sous l'action des gaz de combustion.

Lorsque le propergol engendre lors de sa combustion des gaz à fort pouvoir oxydant (en particulier un propergol ne comportant pas de poudre d'aluminium dans sa formulation), la base élastomérique peut être constituée, essentiellement, soit par une gomme polychloroprène à basse viscosité, comme ci-avant, soit par une gomme silicone à basse viscosité, par exemple celle commercialisée sous la dénomination RP706 par la société française Rhône Poulenc.

Dans le premier cas, différents composants peuvent être ajoutés à la gomme polychloroprène, notamment :
- une résine telle qu'une résine phénolique ayant pour but de favoriser la formation d'un résidu carboné au cours de la pyrolyse de la protection thermique, sous l'action des gaz de combustion ;
- un agent plastifiant, ayant pour but de diminuer la viscosité du mélange au cours de son élaboration et d'améliorer le comportement mécanique de la protection thermique aux basses températures de stockage ; ce plastifiant sera choisi préférentiellement parmi les plastifiants esters ;
- du noir de carbone, ou autre charge renforçante équivalente, ayant pour but d'améliorer les caractéristiques mécaniques de la protection thermique ;
- un système vulcanisant classique constitué par exemple par une association d'oxyde de magnésium, d'oxyde de zinc, et d'acide stéarique ; et
- des fibres minérales, par exemple de silice ou de quartz, ayant pour but de renforcer mécaniquement le résidu carboné se formant au cours de la pyrolyse de la protection thermique sous l'action des gaz de combustion.

Dans le deuxième cas, différents composants peuvent être ajoutés à la gomme silicone à basse viscosité, notamment :
- une charge renforçante à base de poudre de silice, et ayant pour but d'améliorer les caractéristiques mécaniques de la protection thermique ;
- un agent vulcanisant, par exemple à base de peroxyde ;
- des fibres par exemple de carbone (à précurseur rayonne, ou précurseur polyacrylonitrile, ou précurseur brai isotrope) ayant pour but de renforcer mécaniquement le résidu se formant au cours de la pyrolyse de la protection thermique sous l'action des gaz de combustion, et de former préférentiellement, par réaction avec la silice issue de la pyrolyse à haute température de la gomme silicone, du carbure de silicium résistant à l'oxydation ; et
- un promoteur d'adhésion, par exemple à base de diacrylate, ou de diméthacrylate de zinc, et permettant à la protection thermique d'adhérer directement sur la structure métallique durant l'opération de vulcanisation, sans qu'il soit nécessaire de déposer au préalable sur cette dernière un agent d'adhésion spécifique.

La base élastomérique est élaborée par voie sèche en faisant passer les différents constituants dans un mélangeur à cylindres 21 de type connu en soi (figure 2A). On obtient alors une base élastomérique 20 qui peut être stockée mais dont la viscosité est trop faible pour lui faire subir un calandrage en feuille.

La viscosité de la base élastomérique permet d'y incorporer des fibres par voie mécanique, par exemple au moyen d'un mélangeur interne 22 d'un type utilisé couramment dans l'industrie du caoutchouc. Dans un tel mélangeur, les ingrédients sont introduits dans une chambre de mélange 22a et sont mélangés par passage entre deux pales hélicoïdales 22b sous pression exercée par un piston 22c.

On obtient alors une composition solide 23 sous forme divisée, quasi-pulvérulente, qui peut être stockée en l'état pendant des périodes relativement longues, pouvant atteindre plusieurs dizaines de jours, puisque la vulcanisation de la base élastomérique se fait à haute température.

Les fibres introduites sont des fibres réfractaires capables de supporter la température des gaz de combustion pendant la phase opérationnelle du propulseur. On pourra choisir des fibres de carbone, si les gaz de combustion produits par le propergol n'ont pas un pouvoir oxydant trop élevé, ou dans le cas contraire, des fibres de céramique, par exemple des fibres d'oxydes réfractaires telles que des fibres de silice.

Les fibres introduites sont des fibres relativement courtes, de préférence de longueur inférieure à 6 mm, de sorte que la composition 23 reste sous forme assez finement divisée.

La quantité de fibres introduites dans la base élastomérique est choisie de sorte que le pourcentage en poids de fibres dans la composition 23 soit compris entre 30 % et 70 %, de préférence entre 40 % et 50 % afin de procurer un renfort suffisant à la protection thermique sans affecter sa capacité de déformation.

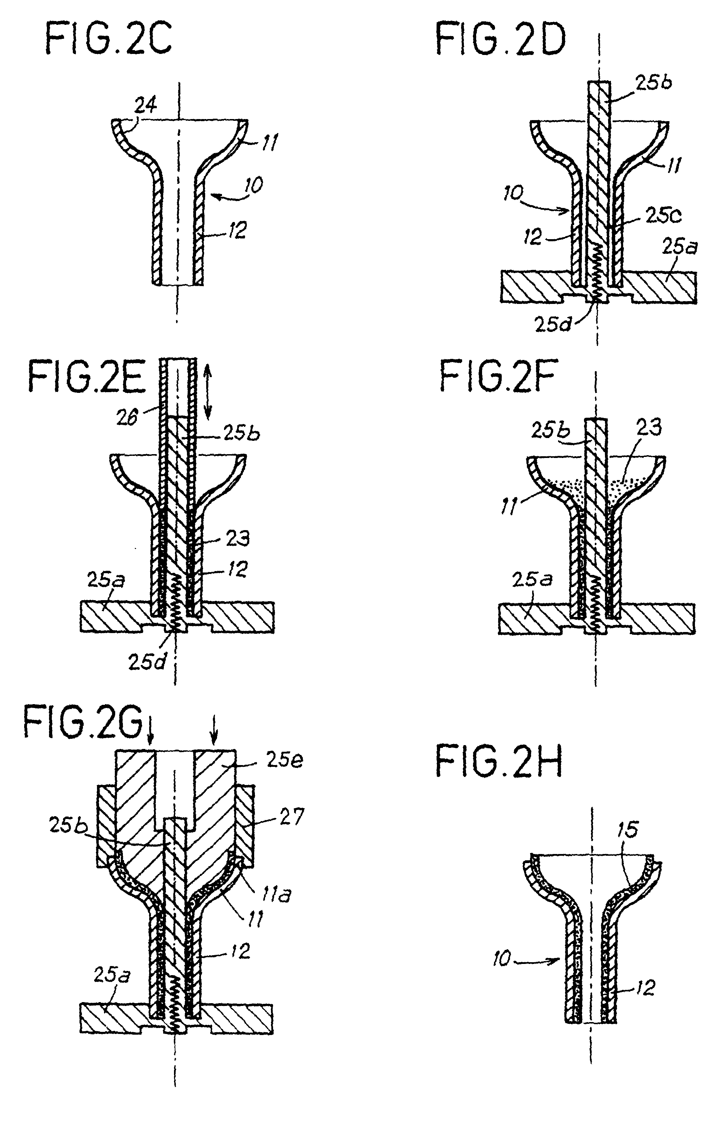

En vue du moulage in situ de la protection thermique dans la structure fond-rallonge 10, la paroi interne de celle-ci peut être revêtue par un agent d'adhésion 24 (figure 2C), en particulier dans le cas d'une formulation à base de gomme polychloroprène. De tels agents d'adhésion sont bien connus dans l'industrie du caoutchouc. On pourra utiliser notamment un produit commercialisé sous la référence générique "Chemosil" par la société allemande Henkel ou un produit commercialisé sous la référence générique "Megum" par la société allemande Metallgeselschaft. En variante, il serait possible, pour des formulations à base de gomme polychloroprène, d'incorporer un promoteur d'adhésion dans la composition de la base élastomérique, afin de s'affranchir de l'utilisation d'agent d'adhésion précité.

En ce qui concerne les formulations à base de gomme silicone, le promoteur d'adhésion est généralement inclus dans la formulation, comme indiqué plus haut.

Ensuite, la structure fond-rallonge 10 est placée dans une structure de moule métallique comprenant un support 25a, sur lequel la rallonge 12 repose par son extrémité, et un noyau central 25b, ménageant avec la paroi interne de la rallonge 12 un espace annulaire 25c dont la largeur correspond à l'épaisseur de la protection thermique à réaliser (figure 2D).

L'espace annulaire 25c est rempli par la composition 23 qui est compactée au moyen d'un outil annulaire 26 emmanché sur le noyau 25b (figure 2E). Afin de faciliter le compactage, les éléments de moule 25a et 25b peuvent être préchauffés à une température sensiblement inférieure à la température de vulcanisation de l'élastomère, par exemple à environ 80 °C. Le préchauffage peut être réalisé par alimentation électrique de résistances 25d noyées dans les éléments de moule.

Après compactage dans l'espace annulaire 25c, le fond 11 est prérempli avec un volume de composition 23 correspondant à la quantité nécessaire pour former la protection thermique interne du fond (figure 2F).

La composition introduite dans le fond 11 est comprimée et mise en forme au moyen d'un élément de moule métallique supplémentaire 25e engagé sur le noyau central 25b (figure 2G), le compactage étant réalisé au moyen d'une presse dont les plateaux sont appliqués contre le support 25a et l'élément de moule 25e. Une virole métallique 27 peut être montée sur la partie d'extrémité 1 la du fond opposée à la rallonge 12, pour servir de guide à l'élément de moule 25e.

La vulcanisation est réalisée soit par chauffage des éléments de moule à la température requise (généralement environ 130 °C à 150 °C), soit en portant l'ensemble en étuve, la composition 23 étant maintenue sous pression d'environ 5 kPa à 8 kPa.

Après démoulage, on obtient un ensemble fond-rallonge 10 muni de sa protection thermique interne 15 (figure 2H).

Bien que l'on ait envisagé dans l'exemple ci-dessus la réalisation d'une protection thermique interne de la structure fond-rallonge d'un propulseur tactique, le procédé selon l'invention peut être utilisé pour former des protections thermiques sur des surfaces de structures diverses de propulseurs, notamment sur des surfaces de fonds de gros propulseurs à poudre.

## Revendications

1. Procédé de réalisation d'une protection thermique interne pour une structure d'un propulseur (18), comprenant la réalisation d'une base élastomérique et son mélange avec des fibres afin d'obtenir une protection thermique (15) sous forme d'une couche d'élastomère renforcé par des fibres, procédé comprenant les étapes qui consistent à :
- préparer une base élastomérique de viscosité inférieure à 1 500 Pa.s à 50°C composée essentiellement d'un produit choisi parmi les polychloroprènes et les silicones gommes qui vulcanisent à une température supérieure à 120 °C,
- mélanger la base élastomérique et les fibres au moyen d'un mélangeur mécanique (22) sans passage par une phase en solution, de manière à obtenir une composition solide sous forme divisée (23) susceptible d'être stockée, et
- mouler la composition in situ afin d'obtenir directement la protection thermique sur la structure à protéger.

2. Procédé selon la revendication 1, **caractérisé en ce que** le moulage est réalisé par mise en place de la composition solide sous forme divisée (23) entre la structure à protéger et au moins un élément de moule complémentaire, mise en compression de la composition, et vulcanisation in situ.

3. Procédé selon l'une quelconque des revendications 1 et 2, **caractérisé en ce que**, préalablement au moulage, la structure à protéger est revêtue d'un agent d'adhésion (24).

4. Procédé selon l'une quelconque des revendications 1 à 3, **caractérisé en ce qu'**un promoteur d'adhésion de la protection thermique sur la structure à protéger est incorporé dans la base élastomérique, de sorte que la composition peut être moulée in situ sans revêtir la structure à protéger d'un agent d'adhésion.

## Patentansprüche

1. Verfahren zur Schaffung eines internen Wärmeschutzes für eine Triebwerkstruktur (18), umfassend die Erstellung einer elastomeren Basis und deren Vermischung mit Fasern, um einen Wärmeschutz (15) in Form einer faserverstärkten Elastomerschicht zu erhalten, umfassend folgende Schritte:
- Zubereiten einer elastomeren Basis mit einer Viskosität von weniger als 1500 Pa · s bei 50°C, im Wesentlichen zusammengesetzt aus einer Substanz, die ausgewählt ist aus Polychloroprenen und Silikonkautschuken, die bei einer Temperatur von über 120°C vulkanisieren,
- Mischen der elastomeren Basis und der Fasern mit Hilfe eines mechanischen Mischers (22) ohne Durchlaufen einer Lösungs-Phase, um eine Feststoffzusammensetzung in für die Lagerung geeigneter unterteilter Form (23) zu erhalten, und
- Formen der Zusammensetzung vor Ort, um auf direktem Weg den Wärmeschutz auf der zu schützenden Struktur zu erhalten.

2. Verfahren nach Anspruch 1, **dadurch gekennzeichnet, dass** das Formen dadurch realisiert wird, dass die Feststoffzusammensetzung in der unterteilten Form (23) zwischen die zu schützende Struktur und mindestens ein komplementäres Formelement eingebracht, die Zusammensetzung unter Druck gesetzt und die Zusammensetzung vor Ort vulkanisiert wird.

3. Verfahren nach einem der Ansprüche 1 und 2, **dadurch gekennzeichnet, dass** vor dem Formvorgang die zu schützende Struktur mit einem Klebstoff (24) überzogen wird.

4. Verfahren nach einem der Ansprüche 1 bis 3, **dadurch gekennzeichnet, dass** in die Elastomer-Basis ein Promoter für das Kleben des Wärmeschutzes an der zu schützenden Struktur eingebracht wird, so dass die Zusammensetzung vor Ort geformt werden kann, ohne dass die zu schützende Struktur mit einem Klebstoff überzogen wird.

## Claims

1. A method of making internal thermal protection for a thruster structure (18), the method comprising making an elastomer base and mixing it with fibres in order to obtain thermal protection (15) in the form of a fibre-reinforced elastomer layer, the method comprising the following steps:
- preparing an elastomer base having viscosity of less than 1,500 Pa.s at 50°C, essentially constituted by a substance selected from polychloroprenes and silicone gums that vulcanise at a temperature above 120°C;
- mixing the elastomer base and the fibres by means of a mechanical mixer (22) without putting the base into solution, so as to obtain a solid composition in divided form (23) that is suitable for storage; and
- moulding the composition *in situ* in order to obtain the thermal protection directly on the structure to be protected.

2. A method according to claim 1, **characterised in that** the moulding is performed by placing the solid composition in divided form (23) between the structure to be protected and at least one complementary mould element, putting the composition into compression, and vulcanising it *in situ*.

3. A method according to claim 1 or 2, **characterised in that**, prior to moulding, the structure to be protected is coated in a bonding agent (24).

4. A method according to any one of claims 1 to 3, **characterised in that** a promoter of bonding between the thermal protection and the structure to be protected is incorporated in the elastomer base, such that the composition can be moulded *in situ* without coating the structure to be protected in a bonding agent.
